# EUROPEAN PATENT SPECIFICATION

(11) **EP 2 394 102 B1**
(45) Date of publication and mention of the grant of the patent: **28.09.2016**
(21) Application number: 10738802.7
(22) Date of filing: 22.01.2010
(51) Int. Cl.: F24F 11/00, G05B 19/418, H04L 12/00, H04L 12/64

(54) **PARALLEL DISTRIBUTION SYSTEM FOR CENTRAL POSITIONED INPUT-OUTPUT DEVICES IN A CONTROL**
PARALLELVERTEILUNGSSYSTEM FÜR ZENTRAL POSITIONIERTE EINGANGS-AUSGANGS-GERÄTE IN EINER STEUERUNG
SYSTÈME DE DISTRIBUTION PARALLÈLE POUR DISPOSITIFS D'ENTRÉE/DE SORTIE POSITIONNÉS DE MANIÈRE CENTRALE DANS UN SYSTÈME DE COMMANDE

(30) Priority: 05.02.2009 SE 0900140
(43) Date of publication of application: 14.12.2011
(73) Proprietor: Fläkt Woods AB, 55184 Jönköping (SE)
(72) Inventor: VIBERG, Mats, S-556 28 Jönköping (SE); BJÄRKLEV, Johan, S-554 65 Jönköping (SE)
(74) Representative: Pitkänen, Hannu Alpo Antero
(86) International application number: PCT/SE2010/000011
(87) International publication number: WO 2010/090571

(56) References cited:
- WO-A2-2005/081077
- GB-A- 2 035 716
- US-A- 6 101 191
- US-A1- 2004 224 627
- US-A1- 2007 198 100

## Description

Present invention relates to a new design of a control- and information system developed for in the first place a ventilating system, and where this ventilating system preferably is constructed of a number of modules, where each module comprises a number of functions and where the parallel control- and information system is based on analog functions in the control system and is constructed and performed according to the preamble of claim 1.

Characterizing of the new control and information system is that a complete system is created which gives an secured quality and where the costs, for an in-place system, are low and well defined.

The high quality is obtained by the design of the system. The human factor, which often constitutes the weak link related to the construction or the assembling of the different components included in a control and regulating system, only appears in a very limited extent by the construction of this new system. The manual work with connecting the different functions in a normal control and regulating system is more or less totally eliminated in this new system.

A well defined cost level of the entire completed system is also a great advantage and this is obtained by that all connecting work between the different modules in the entire system, for example in an entire venting system, as well as all the connecting work inside the individual module, is realized with prefabricated cablings and where those cablings are connected to the complete connections blocks of the regulating circuit by in a factory prefabricated and quality assured connectors/cablings. Also the connection between the individual modules and those in these modules mounted connection blocks is realized with prefabricated, in the same way quality assured cablings. This also applies to the connection between a central control unit and the connection blocks.

The new design of the control and regulating system gives a number of advantages in relation to to those at the market existing solutions.
Many solutions are based on that the control and regulating signals are realized with bus technology. Examples of such solutions are also described in for example WO 2005/081077 A2, where a system is described and where this system is based on a CAN"-bus" which is an example of a digital system for signal transfer.
Another example of a bus technology solution is described in US 2007/0198100 A1, where the system is build upon the technology of "Profibus".
A large disadvantage with those systems is that they are developed for a specific central control unit, i.e., that they often are bounded to a manufactory and accordingly the flexibility get loosed.
A control and regulating system which is based on the bus technology also require specialists to start up the system and for those cases when operational disturbances arise in the system. In the new construction an electrician or a heating, water and sanitation technician can handle the entire system by starting, up as well as the case when service is required.

Many patent publications and also many practical solutions of control and regulating systems constitutes partial solutions which only concerns specific solutions and lacks of an entire foreseeable solution of a complete control and regulating system.
Thus, solutions which are described in DE 199 21 967 A1 and EP 0 491 260 A1 respective, can, for instance, be described as examples of how the signal system looks like inside a specific module, without any coupling to an interconnected complete system.

To sum up the new construction gives following advantages, related to present constructional solutions and then referring only to the connection blocks and the central control unit respective.

For the connection blocks the following applies:
- one and the same construction of the connection block is used in all modules,
- one and the same connection block is used apart of the manufacture of the central control unit,
- one and the same connection block is used to all possible combinations of functions,
- the connection block handles as many functions as the central control unit,
- the connection techniques in the connection block allows for a simple expansion of the number of connecting points and accordingly to the number of peripheral units,
- the connection block also constitutes a forward connecting point to the next connection block,
- the connection blocks has well defined connecting points for the different, in parallel, inputs/outputs (i/o-connections),
- the connecting points - i/o - in the complete connection blocks are locked to defined places in the multipolar connections for the flat cable to/from the control unit and/or between the different connection blocks.

For the central control unit:
- the central control unit has a well defined interface outwards to the connection blocks,
- the signals to and from the control unit are analogous light current signals,
- the signals has well defined determined places in the interface,
- the signals are distributed to one or more connection blocks via a multipolar cable, a flat cable,
- in parallel with the flat cable also a power cable to the connection blocks is installed.

The complete control and regulating system also has the advantages with modularized production of the integral cablings according to the description below.

The above mentioned advantages with the new construction are realized according to the invention by that a construction according to the type mentioned in the preamble is primarily performed in a way that is stated in the characterized part of claim 1. Further characteristics and advantages of the invention are evident from the following description, referring to the attached drawings, which shows a preferred, but not limiting, example of implementation of the invention.

In principle and in detail shows:
Figure 1 a principal diagram of the complete system
Figure 2 a detail view of a connection block.

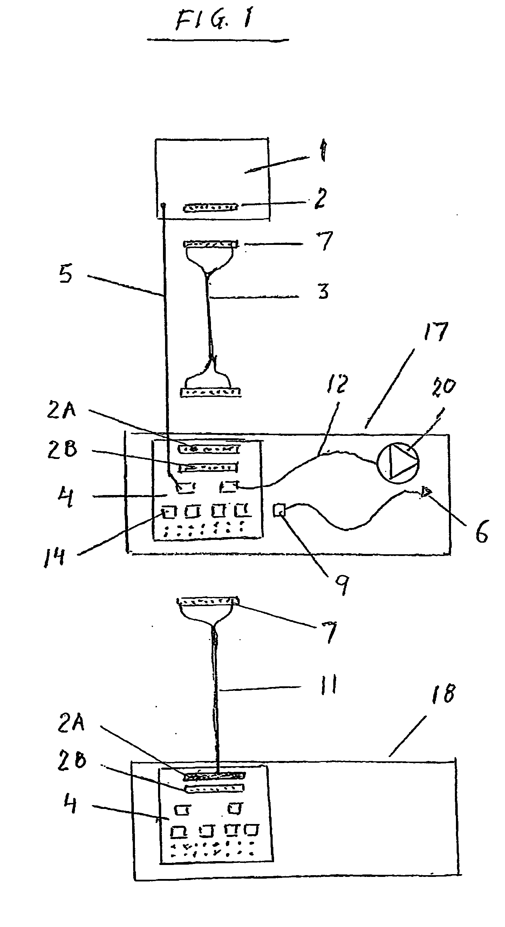

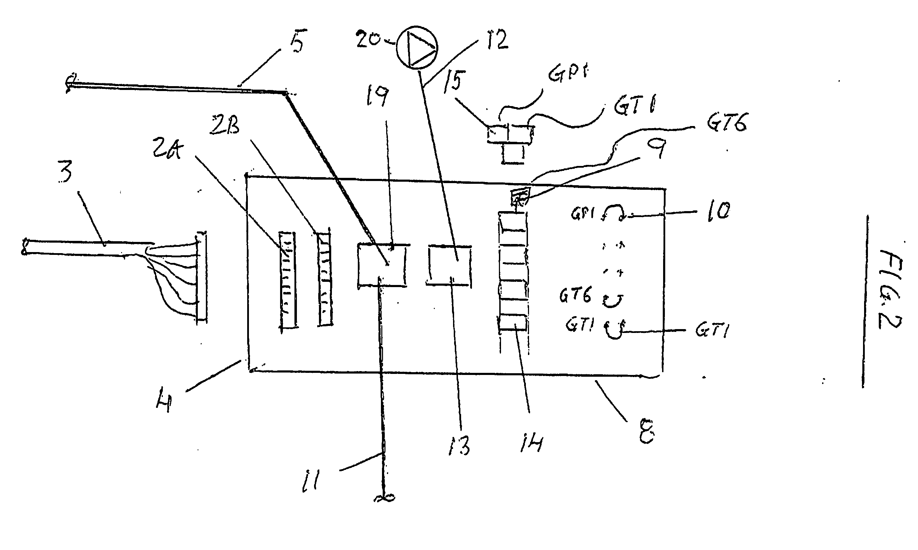

Figure 1 shows a principal example of the complete system of distribution. The central control unit 1 - below named control unit - is not described by its construction, because it is constituted of more or less standardized elements/components. Specific by the new construction is that the control unit has a certain interface 2, to which a multipolar, so called flat cable 3 is connected. The flat cable 3 is preferably produced as an in parallel coupling of a large number of single conductors - preferably 10-40 - and where the number of course is dependent of how complex the entire distributional or regulating system is. The basic principle is that the flat cable has to be so large, so wide, that all functions and their control and regulating circuits has a definite position in the interface and hence also in the flat cable. This means for example that the conductor no. 2 in the interface is that control signal conductor which has to be connected to the pressure sensor 6 in a functional module 17 - named module 17. This is possible thanks that the respective connection block 4 is constructed with the same interface as that one in the control unit 1. Thus, the flat cable 3 is in both ends provided with one and the same construction of conductors 7, and where the conductor is adapted to the interface 2 and to the interface 2A and 2B respective.
This means that a certain conductor - in the example conductor no. 2 - is connected to a circuit which for example is labeled "pressure sensor 6". At this first connecting block you now straps over the pin or the coupling point 10 which means that the connector 2 in the flat cable via a connector 9 at the connector 14 of the complete connection block 4 gives a connection outwards to the pressure sensor 6, named GT6 in figure 2. Naturally it can, by the module 17, be required, or needed, that additional control or regulating circuits has to be connected.

In addition the flat cable is preferably produced in predetermined lengths and therefore a standardization effect is obtained and a simplified logistic, which partly constitutes a cost forcing factor and partly gives conditions for a quality assured production. In parallel with the signal cable/flat cable also a power cable is installed between the control unit and the complete connection block. The power cable is also forwards coupled to the next decoupling unit in the connection point 19 and therefore a similar simplified cable installation as by the flat cable is obtained. Also the power cable is preferably produced in predetermined lengths and with mounted connectors.

As is evident from figure 1 every complete connection block is provided with two interfaces. In the first interface 2A, which in this example is mounted in the connection block in module 17, the flat cable is connected and its connectors 7, which comes from the control unit, and in the second interface 2B a forward coupling is connected to a second connection block which in this example is mounted in a second module 18.
The cable between the different connection blocks is similar in its construction to the one between the control unit 1 and the module 17.

Figure 2 shows the principal construction of the connection block.
At a connection block 4 there is an interface 2A which is the interface where the flat cable 3 from the control unit 1 is connected, and an interface 2B where the flat cable to another connection block 4 is connected, all according to the description referring to figure 1. The power cable 5 is connected at a connection point 19 from which point there is also a possibility to a forward coupling with a power cable 11 to an optional second module 18. The distribution of energy in the power cables 5 and 11 respective is general between the control unit 1 and the connection block 4, and between the different connections blocks via the power cable 11, whereas the current cable 12 which starts at the connection block is dedicated to a specific function, for example to a fan motor 20. Naturally a number of specific current cables can start at the individual connection block according to the requirement in the specific functional module.

The individual control and signal connections from for example pressure sensors - named GP in figure 2 - or the individual temperature sensors - named GT in figure 2 - which are required or which are provided in the specific functional module, for example in module 17, are connected to the connection block and its connectors 14. The connection block 4 is preferably designed with four connectors 14 and where those connectors are coupled to dedicated conductors in the flat cable 3. This means that a certain connector 14 gets certain functions and this function or those functions are selected by that the desired function is strapped or decoupled in a corresponding way, or is switched in from the circuit card via decoupling points 10, which then is marked with GP1.

A normal procedure of connection for, for instance, a sensor GT is that this is connected with a connector 9 to the connector 14 on a circuit card 8, belonging to the complete connection block 4, and that the actual sensor is forward coupled from the connector 14 to the conductor in the multi unit cable 3 which is intended for the sensor GT by that a strapping is done on the circuit card, whereby the correct conductor is connected to that specific actual sensor.
The connector 14 is preferably provided with a design with contact pins resulting in that two different functions, for instance both a GP- and a GT-function, can be connected to one and the same connector 14 and this by mounting a branch unit 15 in the connector 14. This branch unit then has to be designed with the same orientation of the contact pins as the individual connector 14, which then results in that anyone of the both chosen functions which has to be connected to the branch unit 15 is free to be mounted in anyone of the both connectors at the branch unit. This means that the risk for an incorrect mounting, that the incorrect sensor is mounted in wrong connector at the branch unit, is totally eliminated. By using the branch unit 15 also a number of sensors that can be connected are increased to the double amount with maintained number of connectors 14. In this case a strapping over in the decoupling points 10 via the circuit card 8 will of course be done to two conductors belonging to the flat cable 3.

**Parts list**

| | |
|---|---|
| 1=central control unit - named control unit | |
| 2=interface | 3=flat cable |
| 4=connection block | 5=power cable |
| 6=pressure sensor | 7=connector |
| 8=circuit card | 9=connector |
| 10=decoupling point | 11 =power cable |
| 12=current cable | 13=connector |
| 14=connector | 15=branch unit |
| 16=connection parts | 17=functional module - module |
| 18=module | 19=connection point |
| 20=fan motor | |

## Claims

1. Device for a control- and information system, preferably for a ventilating system, and where the control- and information system is constructed of a number of modules and where each module comprises a number of functions and where the principle parts of the parallel control- and information system is provided in a central control unit (1) with an interface (2) to which a flat cable (3) is connected and where this flat cable comprises a number of - preferably 10-40 single conductor - and where each conductor has a fixed function and where this conductor is predetermined in relation to a definite control or regulating function which is handled by the control unit (1) and that the flat cable (3) is at its first end provided with a connector (7) which is connected to the interface (2) of the control unit and is at its second end provided with a similar connector (7) which is connected to a first interface (2A) on a complete connection block (4) and where this interface has the same design and therefore the same functions at the different points of connection as at the interface (2) of the control unit and that a second interface (2B) is provided at the connection block (4) which interface via a circuit card (8), where the circuit card constitutes the device for internal signal distribution in the complete connection block (4), has the same functions for the respective control and regulating function as the first interface (2A) of the complete connection block, and where this second interface constitutes the starting interface for a further connection with a second flat cable to a second complete connection block (4), and where this flat cable in its construction is identical to the first and that the complete connection block is constructed in a way that there are points (10) of decoupling where the control and regulating functions are decoupled, or are connected to the printed circuit card (8), where the connection between a function is done with a connector (9), and where the specific function in the flat cable is strapped via the printed circuit card outwards to that cable/conductor which connects the sensor with that point (10) of decoupling which dedicates a specific function and in a similar way different functions are decoupled from the flat cable to respective sensors or actuators and in parallel with that the control and regulating function is connected between the control unit (1) and the connection blocks (4) also the power cable (5) is connected between the control unit and the first connection block and where this first power cable (5) partially is forward coupled with a second power cable (11) to an additional connection block and partially an electric cable (12) is coupled from a connector (13) outwards to the functions that require current, **characterized in that** only a flat cable (3) is connected between the control unit (1) and a first connection block (4) and that the connection of additional connection blocks to the control unit is done via the first connection block, which means that the complete control and information system - the number of connection blocks (4) and accordingly the function modules (17, 18) - is expandable and this without influencing the first installed function modules.

2. Device according to claim 1, **characterized in that** the control unit is connected to the connection blocks (4) with the flat cable (3) and **in that** the signals to and from the control unit is analogous weak current signals.

3. Device according to claim 1, **characterized in that** the power distribution in the power cable (5) is general between the control unit (1) and the connection block (4) but get one or more specific functions in or at the decoupling unit and from one connector (13) the power in a current cable (12) is dedicated.

4. Device according to claim 1, **characterized in that** a connector (14) of the connection block is realized with two contact pins so that a possibility is available to connect both a pressure and a temperature detector to one and the same connector (14).

5. Device according to claim 4, **characterized in that** a branch unit (15) is mounted in the connector (14) and where the branch unit has two connection sections (16), having the same design and orientation of the both contact pins as the individual connector (14), which means that anyone of the both selected functions which has to be connected to the branch unit are free to be mounted in anyone of the both connections at the branch unit and accordingly a larger number of control or information functions is obtained in the specific connection block.

6. Device according to claim 1, **characterized in that** the connector (7) on the flat cable (3) is designed for direct connection to the interface (2B) of the connection block.

## Patentansprüche

1. Vorrichtung für ein Steuerungs- und Informationssystem, vorzugsweise für ein Ventilationssystem, und wobei das Steuer- und Informationssystem aus einer Anzahl von Modulen aufgebaut ist, und wobei jedes Modul eine Anzahl von Funktionen aufweist, und wobei die Grundteile des parallelen Steuerungs- und Informationssystems in einer zentralen Steuereinheit (1) mit einer Schnittstelle (2) vorgesehen sind, mit der ein Flachkabel (3) verbunden ist, und wobei dieses Flachkabel eine Anzahl von - vorzugsweise 10-40 einzelnen Leitern - aufweist, und wobei jeder Leiter eine feste Funktion aufweist, und wobei dieser Leiter für eine bestimmte Steuerungs- oder Regelungsfunktion vorbestimmt ist, die von der Steuereinheit (1) durchgeführt wird, und dass das Flachkabel (3) an seinem ersten Ende mit einem Verbindungsglied (7) versehen ist, das mit der Schnittstelle (2) der Steuereinheit verbunden ist, und an seinem zweiten Ende mit einem ähnlichen Verbindungsglied (7) versehen ist, das mit einer ersten Schnittstelle (2A) an einem vollständigen Verbindungsblock (4) verbunden ist, und wobei diese Schnittstelle dieselbe Bauweise und daher dieselben Funktionen an den verschiedenen Verbindungspunkten aufweist wie an der Schnittstelle (2) der Steuereinheit, und dass eine zweite Schnittstelle (2B) an dem Verbindungsblock (4) vorgesehen ist, welche Schnittstelle über eine Platine (8), wobei die Platine die Vorrichtung für die innere Signalverteilung in dem vollständigen Verbindungsblock (4) bildet, dieselben Funktionen für die jeweilige Steuerungs- und Regelungsfunktion wie die erste Schnittstelle (2A) des vollständigen Verbindungsblockes aufweist, und wobei diese zweite Schnittstelle die Startschnittstelle für eine weitere Verbindung mit einem zweiten Flachkabel mit einem zweiten vollständigen Verbindungsblock (4) bildet, und wobei dieses Flachkabel in seiner Bauart identisch zu dem ersten ist, und dass der vollständige Verbindungsblock in einer Weise aufgebaut ist, dass dort Punkte (10) einer Entkopplung vorhanden sind, an denen die Steuerungs- und Regelungsfunktionen entkoppelt sind, oder mit der Platine (8) verbunden sind, wobei die Verbindung zwischen einer Funktion mit einem Verbindungsglied (9) bewerkstelligt ist, und wobei die spezifische Funktion in dem Flachkabel über die Platine nach außen zu demjenigen Kabel/Leiter geschleift ist, das/der den Sensor mit demjenigen Punkt (10) der Entkopplung verbindet, der eine spezifische Funktion zuweist, und in ähnlicher Weise sind verschiedene Funktionen von dem Flachkabel auf jeweilige Sensoren oder Aktuatoren entkoppelt, und parallel dazu ist die Steuerungs- und Regelungsfunktion zwischen der Steuereinheit (1) und den Verbindungsblöcken (4) verbunden, auch das Leistungskabel (5) ist zwischen der Steuereinheit und dem ersten Verbindungsblock verbunden, und wobei dieses erste Leistungskabel (5) teilweise mit einem zweiten Leistungskabel (11) mit einem zusätzlichen Verbindungsblock vorwärts gekoppelt ist, und wobei teilweise ein elektrisches Kabel (12) von einem Verbindungsglied (13) nach außen mit den Funktionen gekoppelt ist, die Strom erfordern, **dadurch gekennzeichnet, dass** nur ein Flachkabel (3) zwischen der Steuereinheit (1) und einem ersten Verbindungsblock (4) verbunden ist, und dass die Verbindung zusätzlicher Verbindungsblöcke zu der Steuereinheit über den ersten Verbindungsblock bewerkstelligt ist, was bedeutet, dass das vollständige Steuerungs- und Informationssystem - die Anzahl von Verbindungsblöcken (4) und entsprechend der Funktionsmodule (17, 18) - erweiterbar ist und dies ohne Beeinflussen der ersten installierten Funktionsmodule.

2. Vorrichtung nach Anspruch 1, **dadurch gekennzeichnet, dass** die Steuereinheit mit den Verbindungsblöcken (4) mittels des Flachkabels (3) verbunden ist, und dass die Signale zu und von der Steuereinheit analoge Schwachstromsignale sind.

3. Vorrichtung nach Anspruch 1, **dadurch gekennzeichnet, dass** die Leistungsverteilung in dem Leistungskabel (5) allgemein zwischen der Steuereinheit (1) und dem Verbindungsblock (4) vorhanden ist, jedoch eine oder mehrere spezifische Funktionen in oder an der Entkopplungseinheit erhält, und von einem Verbindungsglied (13) ist die Leistung in einem Stromkabel (12) zugewiesen.

4. Vorrichtung nach Anspruch 1, **dadurch gekennzeichnet, dass** ein Verbindungsglied (14) des Verbindungsblockes mit zwei Kontaktstiften realisiert ist, so dass eine Möglichkeit verfügbar ist, sowohl einen Druck- als auch einen Temperaturdetektor mit ein und demselben Verbindungsglied (14) zu verbinden.

5. Vorrichtung nach Anspruch 4, **dadurch gekennzeichnet, dass** eine Verzweigungseinheit (15) in dem Verbindungsglied (14) angebracht ist, und wobei die Verzweigungseinheit zwei Verbindungsabschnitte (16) aufweist, die dieselbe Bauweise und Orientierung der beiden Kontaktstifte wie das einzelne Verbindungsglied (14) aufweisen, was bedeutet, dass irgendeine der beiden ausgewählten Funktionen, die mit der Verzweigungseinheit zu verbinden sind, frei sind, um in irgendeinem der beiden Verbindungsglieder an der Verzweigungseinheit angebracht zu werden, und entsprechend wird eine größere Anzahl von Steuerungs- oder Informationsfunktionen in dem spezifischen Verbindungsblock erhalten.

6. Vorrichtung nach Anspruch 1, **dadurch gekennzeichnet, dass** das Verbindungsglied (7) an dem Flachkabel (3) für eine direkte Verbindung mit der Schnittstelle (2B) des Verbindungsblockes ausgebildet ist.

## Revendications

1. Dispositif pour un système de commande et d'information, de préférence pour un système de ventilation, et dans lequel le système de commande et d'information est constitué par un certain nombre de modules et dans lequel chaque module comprend un certain nombre de fonctions, et dans lequel les éléments principaux du système parallèle de commande et d'information sont prévus dans une unité de commande centrale (1) comprenant une interface (2) à laquelle est relié un câble ruban (3), et dans lequel ce câble ruban comprend un certain nombre de conducteurs simples - de préférence de 10 à 40 conducteurs simples -, et dans lequel chaque conducteur possède une fonction déterminée, et dans lequel ce conducteur est prédéterminé par rapport à une fonction définie de commande ou de régulation qui est gérée par l'unité de commande (1), et dans lequel le câble ruban (3) est muni à sa première extrémité d'un raccord (7) qui est relié à l'interface (2) de l'unité de commande et est muni à sa deuxième extrémité d'un raccord similaire (7) qui est relié à une première interface (2A) sur un bloc de connexion complet (4), et dans lequel cette interface possède la même configuration et par conséquent les mêmes fonctions aux différents endroits de connexion que celles en vigueur à l'interface (2) de l'unité de commande, et dans lequel une deuxième interface (2B) est prévue au bloc de connexion (4), qui joue son rôle d'interface via une carte de circuits imprimés (8), dans lequel la carte de circuits imprimés constitue le dispositif pour une distribution interne de signaux dans le bloc de connexion complet (4), possède les mêmes fonctions respectives de commande et de régulation que celles de la première interface (2A) du bloc de connexion complet, et dans lequel cette deuxième interface constitue l'interface de départ pour une connexion ultérieure avec un deuxième câble ruban à un deuxième bloc de connexion complet (4), et dans lequel ce câble ruban est identique quant à sa structure au premier câble ruban, et dans lequel le bloc de connexion complet est réalisé d'une manière telle qu'il comprend des endroits de découplage (10) dans lesquels les fonctions de commande et de régulation sont découplées ou sont raccordées à la carte de circuits imprimés (8), dans lequel la connexion entre une fonction est mise en oeuvre avec un raccord (9), et dans lequel la fonction spécifique dans le câble ruban est rattachée via la carte de circuits imprimés à l'extérieur au câble/conducteur qui relie le capteur à ce point de découplage (10) auquel est attribuée une fonction spécifique et, d'une manière similaire, différentes fonctions sont découplées du câble ruban en direction de capteurs ou d'actionneurs respectifs et, parallèlement à cela, les fonctions de commande et de régulation sont reliées entre l'unité de commande (1) et les blocs de connexion (4), le câble d'alimentation (5) étant également relié entre l'unité de commande et le premier bloc de connexion, et dans lequel ce premier câble d'alimentation (5) est en partie couplé en aval avec un deuxième câble d'alimentation (11) à un bloc de connexion supplémentaire, et en partie un câble électrique (12) est couplé à partir d'un raccord (13) vers l'extérieur aux fonctions qui ont besoin de courant, **caractérisé en ce qu'**un seul câble ruban (3) est relié entre l'unité de commande (1) et un premier bloc de connexion (4), et **en ce que** le raccordement de blocs de connexion supplémentaires à l'unité de commande a lieu via le premier bloc de connexion, ce qui signifie que le système complet de commande et d'information - le nombre de blocs de connexion (4) et par conséquent de modules de fonctions (17, 18) - est extensible, et ceci sans influencer les premiers modules de fonction installés.

2. Dispositif selon la revendication 1, **caractérisé en ce que** l'unité de commande est reliée aux blocs de connexion (4) avec le câble ruban (3) et **en ce que** les signaux en direction et au départ de l'unité de commande représentent des signaux de faible courant analogique.

3. Dispositif selon la revendication 1, **caractérisé en ce que** la distribution de l'alimentation dans le câble d'alimentation (5) est générale entre l'unité de commande (1) et le bloc de connexion (4), mais prend une ou plusieurs fonctions spécifiques dans ou à l'unité de découplage, et à partir d'un raccord (13) l'alimentation dans un câble de courant (12) est spécifique.

4. Dispositif selon la revendication 1, **caractérisé en ce qu'**un raccord (14) du bloc de connexion est réalisé avec deux broches de contact, si bien que la possibilité existe de raccorder à la fois un détecteur de pression et un détecteur de température à un seul et même raccord (14).

5. Dispositif selon la revendication 4, **caractérisé en ce qu'**une unité de dérivation (15) est montée dans le raccord (14), et dans lequel l'unité de dérivation possède deux sections de connexion (16) dont la conception et l'orientation des deux broches de contact sont identiques à celles du raccord individuel (14), ce qui signifie que l'on dispose de la liberté de monter l'une quelconque des deux fonctions sélectionnées qui doit être raccordée à l'unité de dérivation dans l'un quelconque des deux raccords à l'unité de dérivation et que l'on dispose par conséquent d'un plus grand nombre de fonctions de commande ou d'information dans le bloc de connexion spécifique.

6. Dispositif selon la revendication 1, **caractérisé en ce que** le raccord (7) sur le câble ruban (3) est conçu pour une connexion directe à l'interface (2B) du bloc de connexion.
